# EUROPEAN PATENT SPECIFICATION

(11) **EP 3 770 528 B1**
(45) Date of publication and mention of the grant of the patent: **28.12.2022**
(21) Application number: 20189876.4
(22) Date of filing: 11.07.2017
(51) Int. Cl.: F24H 1/43, F24H 9/02, F28D 7/02, F28D 21/00, F28F 1/02, B21D 53/02, B21D 53/06

(54) **HEAT EXCHANGER FOR BOILER**
WÄRMETAUSCHER FÜR KESSEL
ÉCHANGEUR THERMIQUE POUR CHAUDIÈRE

(30) Priority: 18.07.2016 IT 201600074665
(43) Date of publication of application: 27.01.2021
(62) Divisional of application: 17751448.6
(73) Proprietor: Valmex S.p.A., 61030 Lucrezia di Cartoceto (PU) (IT)
(72) Inventor: BAMBOZZI, Benedetta, 60044 Fabriano (IT); CHIAVETTI, Flavio, 60044 Fabriano (IT); PUCCIARELLI, Renzo, 60044 Fabriano (IT); SPURI, Claudio, 60044 Fabriano (IT)
(74) Representative: Provvisionato, Paolo

(56) References cited:
- EP-A1- 1 600 708
- EP-A1- 2 375 183
- WO-A1-2010/140174
- WO-A1-2011/128764
- WO-A1-2016/001852
- CN-C- 100 458 303
- DE-A1-102011 016 565

## Description

### Technical Field

The present invention relates to a heat exchanger for gas condensing boilers or the like.

The invention therefore falls within the field of high yield heat generators (with yields, referred to the Inferior Calorific Power, in the range of 95-100%), in particular in that of condensing boilers for room heating and/or production of domestic hot water.

### Background of the Invention

Generally, a boiler is a device wherein water to be heated (both for sanitary uses and rooms heating), runs through a heat exchanger cooperating with a gas burner. Said gas burner may comprise a pipe bundle, preferably spiral wound, being said turns crossed by combustion gases, or fumes, generated by the gas burner, so as to transfer heat to the water running through it. Said combustion gases, after having transferred their heat to water, including the latent condensation heat, are discharged outside of the exchanger and of the gas boiler. Said boilers have been perfected and improved over time, so as to provide the user with increasingly safe and performing devices.

EP 2 375 183 A1 discloses a heat exchanger for heating two liquids. The heat exchanger comprises a cylindrical casing and a pipe coiled about an axis and housed inside the casing. The hollow elongated member comprises two end connectors for connecting it to a domestic water circuit and a heating water circuit, the pipe being made as a single component defined by a seamless single element, and having an elliptical section with the ends having a circular section projecting from said casing, so as to be accessible from the outside.

WO 2011/128764 A1 and DE 10 2011 016565 A1 disclose a heat exchanger with an extruded pipe for conducting a liquid which is coiled about an axis to form a number of adjacent turns. The pipe is housed in a casing and comprises two end connectors for connecting it to the water circuit.

WO 2016/001852 A1 discloses a heat exchanger comprising a first and a second pipes wound is spirals and inside which fluids may circulate. The outermost pipe has an elliptical cross-section. At its ends, two terminals are connected which have each a first portion with the same cross-section of the pipe and a second portion with a circular cross-section.

EP 1 600 708 A1 and CN 100 458 303 C disclose a heat exchanger with a pipe length housed inside a casing. The end portions of the pipe length are worked mechanically to deform them permanently and transform their cross section from substantially oval to circular. An external water circuit is connected to the heat exchanger by means of ring nuts which are integral with circuit.

Currently, one of the major problems regarding the boilers, is given by the temperature control both of the water delivered and of the same heat exchanger. As for the water delivered, it is important to know its temperature so as to verify whether the boiler is working according to the parameters required and set by the user. For example, if the boiler delivered water colder than the set temperature, it should work longer in order to reach the desired thermal comfort or, in case it was used for sanitaryware, it would create discomfort to the user.

Moreover, a punctual and accurate control of the temperature of the exchanger allows preventing breakages or damages to the system. In fact, in the event that the burner was activated without water in the heat exchanger, said exchanger would overheat causing structural damages that may compromise the operation and/or integrity thereof. For example, the pipe bundle may deform or pierce due to the flames and the strong heat, affecting its functionality irreversibly.

Another problem of particular concern for the condensing boilers is due to the impossibility or difficulty of regulating and/or modifying the dimensions of the combustion chamber.

The solutions proposed so far from the prior art are insufficient.

For example heat exchangers have been developed provided with temperature probes or sensors, so as to monitor the temperature thereof.

The U.S. patent No. US2007099134 describes a water heater, in particular a heater for the production of hot water capable of recovering the heat coming from the combustion gas generated by a burner. Said heater comprises a burner, a fan for the supply of air for the combustion, a heat exchanger wherein the fuel gas together with air is delivered, a water pipe that recovers the sensitive heat and the latent heat from the combustion gas, a control unit, provided with a data table, adapted to regulate said fan based on the data of said table. At the inlet and outlet of the exchanger, the heater is further provided with temperature sensors (not described); the combustion level is determined based on the water inlet and outlet temperature values. The heater comprises a fixed partition dividing the combustion chamber into two different and not modifiable zones. However, according to the prior art, said temperature sensors or probes, are positioned on the connecting unions or sleeves joining the end of the exchanger with the pipes of the heating or sanitaryware hydraulic system; this limits the sensitivity of said sensors.

Normally, said connecting unions or sleeves facilitate the connection between the end of the exchanger, not always easily accessible or reachable, and said pipes. Said connecting unions or sleeves are usually made of plastics or the like, and have relatively low heat transmission coefficients. This leads the thermal probe to operate with delay and inaccuracy, generating measuring errors and low readiness of the boiler, or in general of its control means, to react in order to bring the measured parameters in line with the set parameters.

In other cases, because of the reduced spaces available and in order to guarantee easy access, said temperature sensors or probes are not installed in the immediate vicinity of the ends of the exchanger, and the data they measure may be affected by the distance of the sensor from the water inlet and outlet point.

Another example of exchanger is illustrated in the U.S. patent No. US20080185131 that shows a heat exchanger for a gas boiler for the production of hot water, comprising an enclosure, a pipe forming a plurality of coils wherealong water runs, deflector means to guide the combustion fumes and spacer means in order to space the turns from each other.

Said exchanger comprises a disc, not better described but of solid shape, dividing into two the combustion chamber. Said disc, presumably made of refractory material, is difficult to produce, due to the envisaged coupling with the coils of the pipe bundle, and the document does not illustrate any ways for producing or installing it. As is known, in fact, the refractory materials require more complex production steps, particularly if particular geometric shapes are provided.

WO 94/16272 A1 discloses a heat exchanger having several pipes wound in coils inside an enclosure. The pipes have a generally flattened cross-section with cylindrical ends. In order to manufacture the coiled pipe, a length of a cylindrical tube with a circular cross-section is bent and flattened in a die except for its ends which remain cylindrical. An inlet pipe for the heat transfer fluid to be heated branches off and is connected to first ends of the pipes inside the enclosure. An outlet pipe for the heated transfer fluid gathers the branch conduits which are connected to second ends of the pipes before exiting the enclosure.

### Summary of the invention

The object of the present invention is to solve the problems described above.

A further object of the present invention is to provide an exchanger allowing a direct connection between its ends and the hydraulic pipes.

These and other objects, which shall appear clear hereinafter, are achieved with a heat exchanger, illustrated in the following description and in the annexed claims, which constitute an integral part of the description itself. More specifically, the invention is set out in the appended set of claims.

### Brief Description of the Drawings

Further features of the present invention shall be better highlighted by the following description of a preferred embodiment, in accordance with the patent claims and illustrated, purely by way of a non-limiting example, in the annexed drawing tables, in which:
- Fig. 1 is a perspective view of a possible executive variant of the exchanger according to the present invention;
- Fig. 2 is a front view of the exchanger of Fig. 1;
- Fig. 3 is an exploded view of the exchanger of Fig. 1;

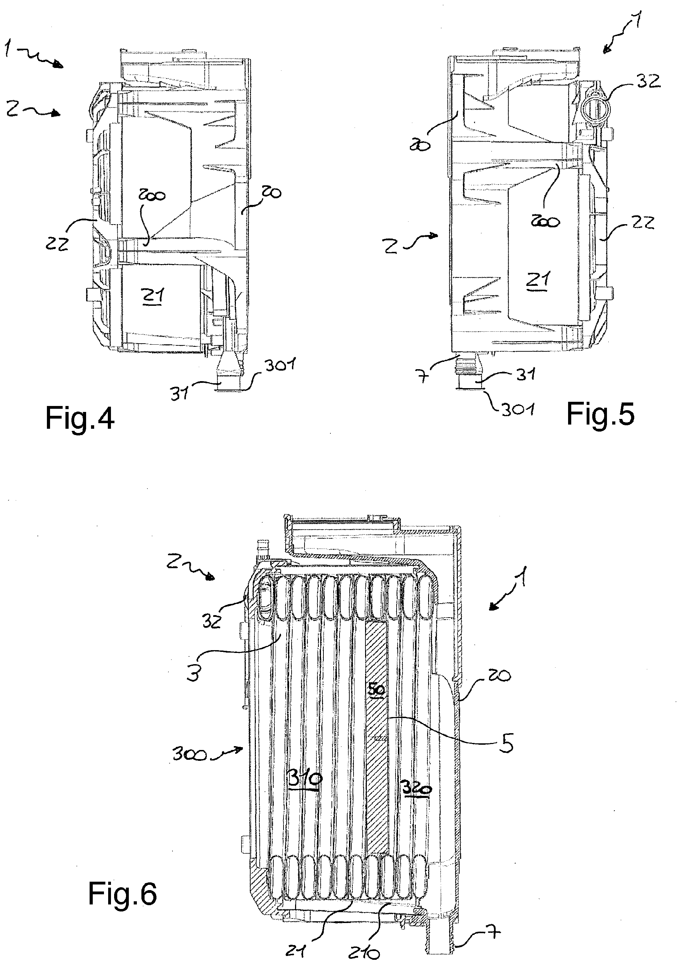

- Fig. 4 is a side view of the exchanger of Fig. 1;
- Fig. 5 is a side view of the exchanger of Fig. 1;
- Fig. 6 is a section view of the exchanger of Fig. 1;
- Fig. 7 is a perspective view of a component of the container body of the exchanger of Fig. 1;
- Fig. 8 is a front view of the coil of the exchanger of Fig. 1;
- Fig. 9 is a perspective view of the exchanger of Fig. 8.

### Detailed Description

Unless where otherwise specified, in this report any possible spatial reference such as the terms "up/down, front/rear, right/left etc." refers to the position in which the elements are represented in the annexed figures.

With the purpose of highlighting some features instead of others, not necessarily what described in the annexed drawings is perfectly to scale.

The heat exchanger 1, hereinafter for simplicity referred to as exchanger 1, comprises a suitable container body 2, at least one coil 3, and at least one temperature sensor means 4.

The term coil is to be intended as a pipe bundle made by a pipe 3, preferably metallic, spiral wound around a central axis, adapted to form a suitable number of turns, and delimiting a combustion chamber 300 wherein the fumes produced by a burner (not shown) are introduced.

Said coil 3 is advantageously made as a single component, i.e., it is defined by a seamless single element. The coil 3 is thus devoid of welds and/or junctions; this favours a uniform and homogeneous deformation, due to the temperatures to which it is subject. The coil 3 provides at least a first end 31, which acts as an inlet for the heat transfer fluid to be heated, and at least a second end 32, which acts as an outlet for said heat transfer fluid.

Said coil 3 has an elliptical section, while said ends 31 and 32 have a circular section that eases the operations of connection to the pipes of the water system or to any mechanical components (adjusting valves, pumps, etc.).

Advantageously, said ends 31 and 32 are obtained by shaping the elliptical section by known mechanical processes for plastic deformation, so as to obtain a change of section, from elliptical to circular, without the help and the mounting of additional elements such as unions, manifolds or the like; this allows a metallic continuity between the exchanger and the pipes. Vice versa, in a variant which is not part of the invention, still with known processes, the section of the coil 3 is deformed from circular to elliptical except for said ends 31 and 32.

In the exchanger 1 according to the present invention, the ends 31 and 32 project from the container body 2, in such extent as to guarantee an easy access to the same. In general, the container body 2 may be made according to different executive variants, all characterised in that the ends 31 and 32 of the coil 3 project from said container body 2.

Such feature advantageously allows positioning and installing the sensor means 4 on said ends 31 and 32. This way the sensor means 4 are able to measure the temperature of the water in the immediate vicinity of the inlet and/or outlet of the exchanger 1, avoiding any alteration of the data detected due to the distance between the end of the exchanger and the position of the sensor.

Further, the sensor means 4 are advantageously in direct contact with the metal walls of the coil 3, so as to control its temperature more effectively.

Such arrangement allows measuring the temperature of the coil 3 more accurately and faster. In fact, the metallic walls of the coil 3 have higher heat exchange coefficients than the plastic materials used for the unions or the like currently used and the sensor means 4 may detect the temperature value faster and more promptly. Further, since the ends 31 and 32 project from the container body 2, said sensor means are easily accessible and reachable from outside; this allows easy and quick maintenance and/or change of the same.

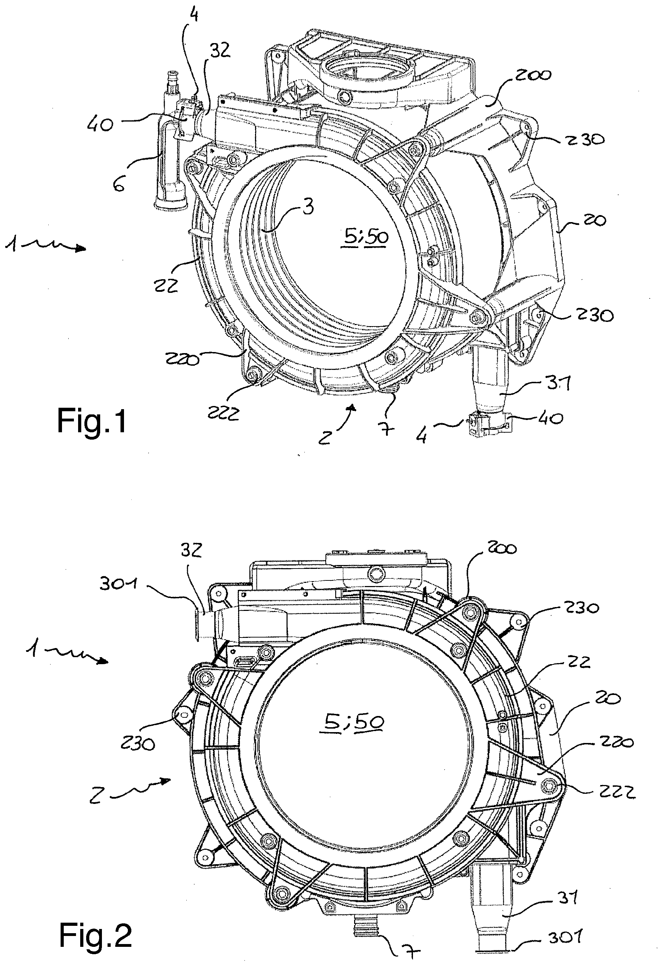

Said sensor means 4 maybe constrained and fixed to the end 31 and 32 of the coil 3 through suitable mounting means 40. According to a first embodiment variant, shown in Fig. 1, said mounting means 40 comprise the fixing means, such as for example the metal clips, which carry out the locking of the said ends 31 and 32 with the pipes of the heating hydraulic system or of the sanitary ware (not illustrated).

In fact, thanks to the projection of the ends 31 and 32 from the container body 2, it is possible to avoid the use of the current unions or sleeves, carrying out a direct connection between said ends 31 and 32 and the pipes, said connection being guaranteed and carried out by said fixing means.

Said fixing means, therefore, carry out and ensure the attachment of the exchanger to the pipes and do not carry out any connecting function between the parts, i.e. the water flows directly from the pipe to the first end 31 and from the second end 32 to the pipe.

In order to ease the connection of the parts and obtain a stable and secure connection, said ends 31 and 32 are provided with suitable collars 301. Said collars 301 are obtained and defined at the inlet of said ends 31 and 32 and cooperate with said fixing means.

Nothing prevents said fixing means 40 from comprising, for example, couplable half-shells, straps, clamps, or the like.

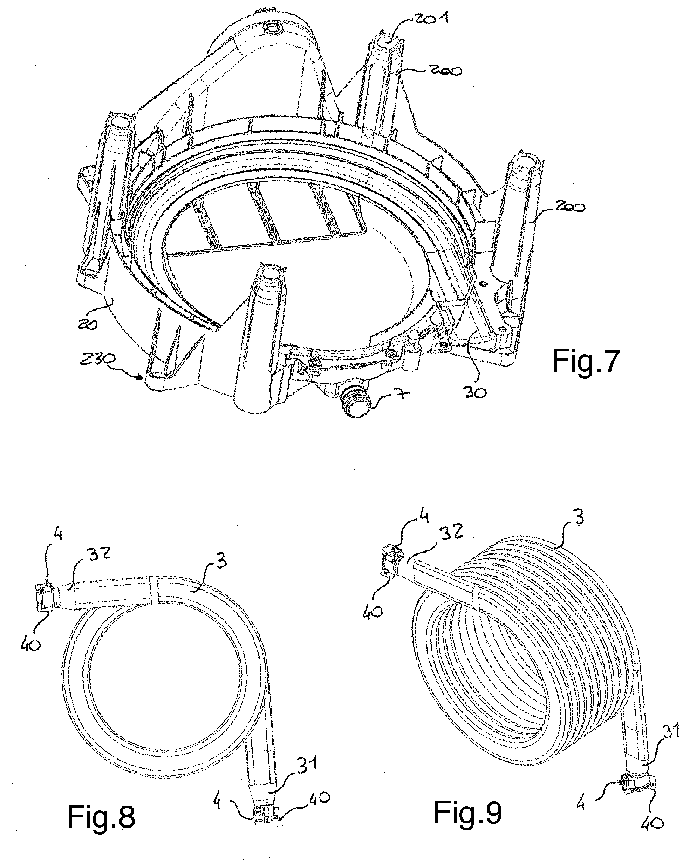

Said ends 31 and 32 may be arranged according to different executive variants, provided by way of a non-limiting example. For example, said ends 31 and 32 may be arranged with the reciprocal longitudinal axes parallel to each other (variant not illustrated) or may be arranged with the reciprocal longitudinal axes orthogonal to each other (Figs. 8 and 9). Said last variant, shown in the accompanying figures, allows having the end 32 substantially horizontal relative to the exchanger 1 (Fig. 2); this allows easily installing a deaerator 6, substantially a device used to eliminate air or gas contained in hydraulic systems or the like, and improving the release and venting of the air. Moreover, being said end 32 projecting from the container body 2, the installation of the deaerator 6 is of easy access for the operator, so as to ease him in the maintenance or change steps of the same.

Said exchanger 1 is advantageously provided with a partition 5, which is not part of the claimed invention, particularly useful in the case of condensing boilers, provided with a suitable layer of insulating material 50. Said partition 5, substantially a disc-shaped element, divides said combustion chamber 300 into two parts; a first exchanging chamber 310 called "sensitive exchanger" and a second exchanging chamber 320 called "cold exchanger" or "condensing".

As it is known, the first exchanging chamber 310 is exposed to the flames of the burner, and the fume flow occurs in a radial direction (i.e. orthogonal to the central axis of the exchanger 1); therefore, each fume thread exchanges heat individually with a single turn of those present. The partially cooled fumes are guided towards the second exchanging chamber 320, where they are further cooled to such a temperature as to have the condensation of part of the water vapour contained therein and then sent to a stack (not shown) for being discharged to the atmosphere. Said partition 5 prevents the direct communication between the respective first chamber 310 and second chamber 320, guaranteeing the above described flow of the combustion fumes. Moreover, said partition 5 is "screwed" along the turns of the coil 3.

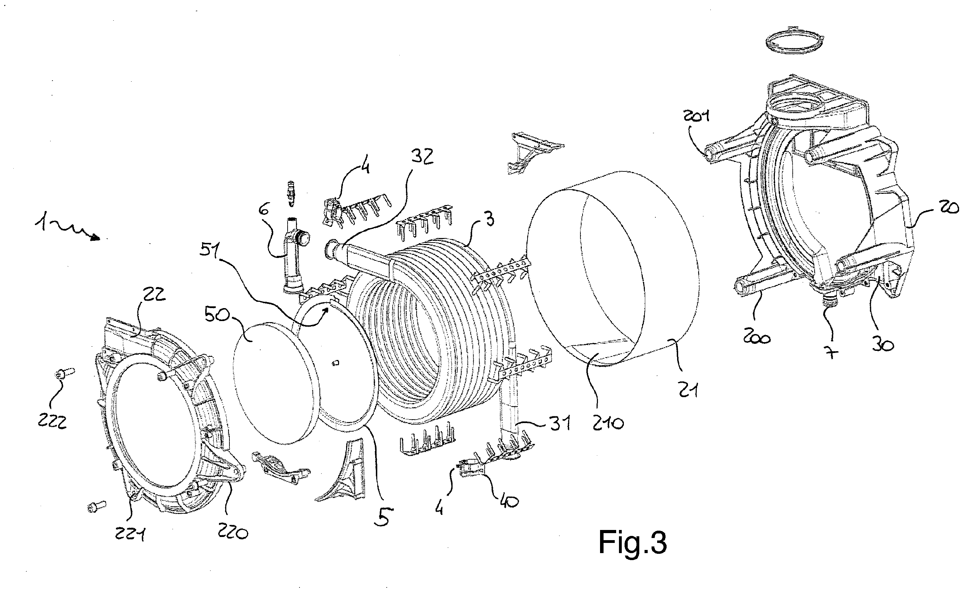

In substance, the partition 5 may be moved along said coil 3 with a rotary movement similar to screwing; this allows modifying the position of said partition 5 and thus regulating and varying the dimensions of the said chambers 310 and 320. For this purpose the partition 5 is shaped so as to provide a guiding slot to ease said screwing, in particular said partition 5 comprises a disc, preferably of sheet, having an outer profile 51 with helical pattern (Fig. 3). Such shape of the partition 5 simplifies the manufacture step, since it is possible to make a disc and shape the outer profile 51 thereof according to known techniques, and subsequently to suitably position and arrange the layer of insulating material 50. This allows obtaining the disc 5 according to the most advantageous and efficient manufacturing techniques, allowing to simplify the production process, and not to bind the manufacturer to make said partition 5 entirely of refractory material. Said shape of the partition 5 also eases the mounting and insertion of the same on the coil 3.

According to a possible executive variant, provided by way of a non-limiting example, the container body 2 may comprise a suitably shaped bottom 20, a shell 21 and a cover 22. Said bottom 20 and said cover 22 are couplable to each other through suitable fixing means, described below, so as to be able to house, in cooperation with said shell 21, the coil 3. For this purpose a plurality of seats may be advantageously provided, suitably shaped and moulded, adapted to replicate and reproduce the outer profile of said coil 3, so as to facilitate the insertion of the same in said bottom 20.

For example the bottom 20 is provided with a seat 30 adapted to receive the end 31 of the coil 3. The complementarity of the surfaces of said bottom 20 and of said cover 22 with said coil 3, avoids possible clearances or any gap that may lead to vibrations or movements of the coil 3 inside the container body 2, perhaps during the transport or installation operations.

Said bottom 20 is further provided with suitable longitudinal projections 200, substantially supports whereon said cover 22 is fixed, by screws or the like, so as to lock and clamp the various elements that make up said heat exchanger. Said longitudinal projections 200 may be provided with threaded holes 201 whereon the screws 222 are screwed. For this purpose said cover 22 may be advantageously provided with a plurality of appendices 220 extending radially outwards. Said appendices 220 may be provided with through holes 221 whereon the screws 222 are inserted that screwing on said longitudinal projections 200, clamp said cover 22 to said bottom 20. Moreover, said bottom 20 may be provided with suitable through holes 230 that allow the mounting and fixing of the exchanger 1 to the body of the boiler.

The shell 21 has a substantially cylindrical shape and may be advantageously made of metal, for example of stainless steel. Moreover the shell 21 may be provided, entirely or partially, with a layer of insulating material capable of retaining the heat within the combustion chamber 300, to the advantage of energy efficiency, and avoiding high temperature surfaces to be exposed, potentially critical and dangerous for the user and/or the mechanical and/or electrical devices arranged in the proximity of them. Said shell 21 is advantageously placed and enclosed between said bottom 20 and said cover 22.

According to a possible executive variant, the shell 21 is retained into position thanks to the coupling with suitable seats (not illustrated) provided and obtained on said bottom 20 and cover 22. In particular, the edges of the shell 21 insert and engage with suitable grooves and/or edges, whereon sealant may be advantageously placed. Moreover, a channel 210 adapted to convey the condensation towards the condensation discharge 7 may be provided on the shell 21.

The exchanger 1 according to the present invention provides and allows the ends 31 and 32 to project from the container body 2 wherein it is housed. In particular, observing the figures, it is understood that said ends 31 and 32 project from the container body 2, allowing the user to easily reach the same. Such accessibility eases the connections of the pipes that takes place through fixing means, such as for example a metal clip, cooperating with the collars 301 obtained and defined at the inlet of said ends 31 and 32.

In general, therefore, the container body 2 may be made according to different executive variants, all provided with the ends of the coil 3 projecting from said container body 2.

Such feature allows:
- the installation of sensor means 4 on said ends 31 and 32, so as to make them accessible and reachable from the outside for any maintenance and/or changing operation;
- greater accessibility that simplifies the installation, maintenance, control and/or changing operations of the exchanger and its components;

- more prompt and accurate temperature detection;
- direct connection between said ends 31 and 32 and the pipes of the heating hydraulic system or of the sanitary ware;
- avoiding the use of connecting unions or sleeves for connecting said ends 31 and 32 to the pipes.

It is clear that in the practical embodiment of the invention numerous modifications and further variants may be provided, all falling within the same inventive concept as defined by the claims; all the various components and details previously described may also be replaced by technically equivalent elements.

For example, the container body may comprise half-shells couplable to each other, suitably shaped so as to allow the projection of the ends of the coil.

## Claims

1. A heat exchanger (1) for gas condensing boilers, provided with a container body (2) within which at least one pipe bundle (3) is disposed to delimit a combustion chamber (300), the at least one pipe bundle (3) being made by a pipe spiral wound around a central axis, a first end (31) of the pipe serving as an inlet for the heat transfer fluid to be heated, and a second end (32) of the pipe serving as an outlet for said heat transfer fluid, the pipe bundle (3) being made as a single component defined by a seamless single element, the pipe bundle (3) having an elliptical section with said ends (31; 32) having a circular section projecting from said container body (2), so as to be accessible from the outside, to ease the operations of connection of the ends (31; 32) to pipes of a water system, wherein collars (301) are provided and defined at the inlet of the ends (31; 32) which are able to cooperate with fixing means to connect the ends (31; 32) to the pipes of the water system.

2. A heat exchanger according to claim 1, wherein when the ends (31; 32) are connected to to the water pipes of the water system, this connection is direct so as to allow the water to flow directly from the water pipe to the first end (31) and from the second end (32) to the water pipe.

3. A heat exchanger according to claim 1 or claim 2, wherein said fixing means (40) are provided at the ends (31; 32) to carry out the locking of the said ends (31; 32) with the pipes of the water system.

4. A heat exchanger according to any one of claims 1 to 3, wherein said fixing means comprise couplable half-shells, straps, clamps, or metal clips.

5. A heat exchanger according to any one of claims 1 to 4, wherein said fixing means are metal clips.

6. A heat exchanger according to any one of claims 1 to 5, wherein the ends (31; 32) are arranged with their respective longitudinal axes parallel to each other.

7. A heat exchanger according to any one of claims 1 to 5, wherein the ends (31; 32) are arranged with their respective longitudinal axes orthogonal to each other.

8. A heat exchanger according to any one of the preceding claims, wherein sensor means (4) are positioned on the ends (31; 32).

9. A method of manufacturing a pipe bundle (3) for a heat exchanger (1) for gas condensing boilers, the pipe bundle (3) being made by a pipe spiral wound around a central axis to form a coil with an elliptical section and ends (31; 32) with a circular section obtained by shaping the elliptical section by mechanical processes for plastic deformation, so as to obtain a change of section, from elliptical to circular, thus allowing a metallic continuity between the exchanger and pipes of a water system, collars (301) being obtained and defined at the inlet of the ends (31; 32) to cooperate with fixing means to connect the ends (31; 32) to the pipes of the water system.

10. A method of manufacturing a heat exchanger (1) for gas condensing boilers, comprising the steps of:
- providing at least one pipe bundle (3) made by a pipe spiral wound around a central axis, with a first end (31) of the pipe serving as an inlet for the heat transfer fluid to be heated, and a second end (32) of the pipe serving as an outlet for said heat transfer fluid, the pipe bundle (3) being made as a single component defined by a seamless single element and having an elliptical section with ends (31; 32) with a circular section,
- placing the at least one pipe bundle (3) inside a container body (2) so that the pipe bundle (3) delimits a combustion chamber (300) while the ends (31; 32) protrude from the container body (2) so as to be accessible from the outside thereof, to ease the operations of connection of the ends (31; 32) to pipes of a water system,
- obtaining and defining collars (301) at the inlet of the ends (31; 32) to cooperate with fixing means to connect the ends (31; 32) to the pipes of the water system.

## Patentansprüche

1. Wärmetauscher (1) für Gas-Brennwertkessel, versehen mit einem Behälterkörper (2), in dem mindestens ein Rohrbündel (3) angeordnet ist, um eine Brennkammer (300) zu begrenzen, wobei das mindestens eine Rohrbündel (3) aus einer um eine Mittelachse gewickelten Rohrspirale besteht, wobei ein erstes Ende (31) des Rohres als Einlass für die zu erwärmende Wärmeträgerflüssigkeit dient, und wobei ein zweites Ende (32) des Rohres als Auslass für die Wärmeträgerflüssigkeit dient, wobei das Rohrbündel (3) als eine durch ein einzelnes nahtloses Element gebildete einzelne Komponente hergestellt ist, wobei das Rohrbündel (3) einen elliptischen Querschnitt besitzt, bei dem die Enden (31; 32) einen aus dem Behälterkörper (2) ragenden kreisförmigen Querschnitt besitzen, um von außen zugänglich zu sein, um den Vorgang des Verbindens der Enden (31; 32) mit Rohren eines Wassersystems zu erleichtern, wobei Manschetten (301) am Einlass der Enden (31; 32) vorgesehen und ausgebildet sind, die mit Befestigungsmitteln zusammenwirken können, um die Enden (31; 32) mit den Rohren des Wassersystems zu verbinden.

2. Wärmetauscher nach Anspruch 1, wobei dann, wenn die Enden (31; 32) mit den Wasserrohren des Wassersystems verbunden sind, diese Verbindung eine direkte Verbindung ist, damit das Wasser direkt von dem Wasserrohr zu dem ersten Ende (31) und von dem zweiten Ende (32) zu dem Wasserrohr fließen kann.

3. Wärmetauscher nach Anspruch 1 oder Anspruch 2, wobei die Befestigungsmittel (40) an den Enden (31; 32) vorgesehen sind, um die Verriegelung der Enden (31; 32) mit den Rohren des Wassersystems vorzunehmen.

4. Wärmetauscher nach einem der Ansprüche 1 bis 3, wobei die Befestigungsmittel koppelbare Halbschalen, Riemen, Klammern oder Metallclips umfassen.

5. Wärmetauscher nach einem der Ansprüche 1 bis 4, wobei die Befestigungsmittel Metallclips sind.

6. Wärmetauscher nach einem der Ansprüche 1 bis 5, wobei die Enden (31; 32) so angeordnet sind, dass ihre jeweiligen Längsachsen parallel zueinander verlaufen.

7. Wärmetauscher nach einem der Ansprüche 1 bis 5, wobei die Enden (31; 32) so angeordnet sind, dass ihre jeweiligen Längsachsen zueinander orthogonal sind.

8. Wärmetauscher nach einem der vorhergehenden Ansprüche, wobei Sensormittel (4) an den Enden (31; 32) positioniert sind.

9. Verfahren zur Herstellung eines Rohrbündels (3) für einen Wärmetauscher (1) für Gas-Brennwertkessel, wobei das Rohrbündel (3) aus einer um eine Mittelachse gewickelten Rohrspirale besteht, um eine Spule mit einem elliptischen Querschnitt und Enden (31; 32) mit einem kreisförmigen Querschnitt zu bilden, den man durch Umformen des elliptischen Querschnitts durch mechanische Verfahren für eine plastische Verformung erhält, um so eine Änderung des Querschnitts von elliptisch zu kreisförmig zu erhalten, was eine metallische Kontinuität zwischen dem Wärmetauscher und Rohren eines Wassersystems erlaubt, wobei am Einlass der Enden (31; 32) Manschetten (301) entstanden und ausgebildet sind, die mit Befestigungsmitteln zusammenwirken, um die Enden (31; 32) mit den Rohren des Wassersystems zu verbinden.

10. Verfahren zur Herstellung eines Wärmetauschers (1) für Gas-Brennwertkessel, mit den folgenden Schritten:
- Bereitstellung mindestens eines Rohrbündels (3), das aus einer um eine Mittelachse gewickelten Rohrspirale besteht, wobei ein erstes Ende (31) des Rohres als Einlass für die zu erwärmende Wärmeträgerflüssigkeit dient, und wobei ein zweites Ende (32) des Rohres als Auslass für die Wärmeträgerflüssigkeit dient, wobei das Rohrbündel (3) als eine durch ein einzelnes nahtloses Element gebildete einzelne Komponente hergestellt ist und einen elliptischen Querschnitt mit Enden (31; 32) mit einem kreisförmigen Querschnitt besitzt,
- Platzieren des mindestens einen Rohrbündels (3) in einem Behälterkörper (2), sodass das Rohrbündel (3) eine Brennkammer (300) begrenzt, während die Enden (31; 32) aus dem Behälterkörper (2) ragen, um von außen zugänglich zu sein, um den Vorgang des Verbindens der Enden (31; 32) mit Rohren eines Wassersystems zu erleichtern,
- Erhalten und Ausbilden von Manschetten (301) am Einlass der Enden (31; 32), die mit Befestigungsmitteln zusammenwirken, um die Enden (31; 32) mit den Rohren des Wassersystems zu verbinden.

## Revendications

1. Échangeur thermique (1) pour chaudières à gaz à condensation, prévu avec un corps formant contenant (2) à l'intérieur duquel au moins un faisceau de tubes (3) est disposé pour délimiter une chambre de combustion (300), le au moins un faisceau de tubes (3) étant réalisé par un tube enroulé en spirale autour d'un axe central, une première extrémité (31) du tube servant d'entrée pour le fluide de transfert de chaleur à chauffer, et une seconde extrémité (32) du tube servant de sortie pour ledit fluide de transfert de chaleur, le faisceau de tubes (3) étant réalisé comme un composant unique défini par un seul élément sans soudage, le faisceau de tubes (3) ayant une section elliptique avec lesdites extrémités (31 ; 32) qui ont une section circulaire faisant saillie dudit corps formant contenant (2), afin d'être accessible depuis l'extérieur, pour faciliter les opérations de raccordement des extrémités (31 ; 32) aux tubes d'un système d'eau, dans lequel des colliers (301) sont prévus et définis à l'entrée des extrémités (31 ; 32) qui peuvent coopérer avec des moyens de fixation pour raccorder les extrémités (31 ; 32) aux tubes du système d'eau.

2. Échangeur thermique selon la revendication 1, dans lequel lorsque les extrémités (31 ; 32) sont raccordées aux tubes d'eau du système d'eau, ce raccordement est direct afin de permettre à l'eau de s'écouler directement du tube d'eau à la première extrémité (31) et de la seconde extrémité (32) au tube d'eau.

3. Échangeur thermique selon la revendication 1 ou la revendication 2, dans lequel lesdits moyens de fixation (40) sont prévus aux extrémités (31 ; 32) pour réaliser le verrouillage desdites extrémités (31 ; 32) avec les tubes du système d'eau.

4. Échangeur thermique selon l'une quelconque des revendications 1 à 3, dans lequel lesdits moyens de fixation comprennent des demi-coques, des sangles, des colliers ou des attaches métalliques pouvant être couplés.

5. Échangeur thermique selon l'une quelconque des revendications 1 à 4, dans lequel lesdits moyens de fixation sont des attaches métalliques.

6. Échangeur thermique selon l'une quelconque des revendications 1 à 5, dans lequel les extrémités (31 ; 32) sont agencées avec leurs axes longitudinaux respectifs parallèles entre eux.

7. Échangeur thermique selon l'une quelconque des revendications 1 à 5, dans lequel les extrémités (31 ; 32) sont agencées avec leurs axes longitudinaux respectifs orthogonaux entre eux.

8. Échangeur thermique selon l'une quelconque des revendications précédentes, dans lequel des moyens de capteur (4) sont positionnés sur les extrémités (31 ; 32).

9. Procédé pour fabriquer un faisceau de tubes (3) pour un échangeur thermique (1) pour chaudières à gaz à condensation, le faisceau de tubes (3) étant réalisé par un tube enroulé en spirale autour d'un axe central afin de former une bobine avec une section elliptique et des extrémités (31 ; 32) avec une section circulaire obtenue en façonnant la section elliptique par des processus mécaniques pour déformation plastique, afin d'obtenir un changement de section, d'elliptique à circulaire, permettant ainsi une continuité métallique entre l'échangeur et les tubes d'un système d'eau, des colliers (301) étant obtenus et définis à l'entrée des extrémités (31 ; 32) pour coopérer avec des moyens de fixation afin de raccorder les extrémités (31 ; 32) aux tubes du système d'eau.

10. Procédé pour fabriquer un échangeur thermique (1) pour chaudières à gaz à condensation, comprenant les étapes consistant à :
prévoir au moins un faisceau de tubes (3) réalisé par un tube enroulé en spirale autour d'un axe central, avec une première extrémité (31) du tube qui sert d'entrée pour le fluide de transfert de chaleur à chauffer, et une seconde extrémité (32) du tube qui sert de sortie pour ledit fluide de transfert de chaleur, le faisceau de tubes (3) étant réalisé comme un composant unique défini par un seul élément sans soudage et ayant une section elliptique avec des extrémités (31 ; 32) avec une section circulaire,
placer le au moins un faisceau de tubes (3) à l'intérieur d'un corps formant contenant (2) de sorte que le faisceau de tubes (3) délimite une chambre de combustion (300) alors que les extrémités (31 ; 32) font saillie du corps formant contenant (2) afin d'être accessible depuis son extérieur, pour faciliter les opérations de raccordement des extrémités (31 ; 32) aux tubes d'un système d'eau,
obtenir et définir des colliers (301) à l'entrée des extrémités (31 ; 32) pour coopérer avec des moyens de fixation pour raccorder les extrémités (31 ; 32) aux tubes du système d'eau.
